# EUROPEAN PATENT SPECIFICATION

(11) **EP 3 098 887 B1**
(45) Date of publication and mention of the grant of the patent: **10.05.2017**
(21) Application number: 16171638.6
(22) Date of filing: 27.05.2016
(51) Int. Cl.: H01M 8/0612, H01M 8/04014, H01M 8/04007, H01M 8/04492, H01M 8/04701

(54) **FUEL CELL SYSTEM**
BRENNSTOFFZELLENSYSTEM
SYSTÈME DE PILE À COMBUSTIBLE

(30) Priority: 29.05.2015 JP 2015109569
(43) Date of publication of application: 30.11.2016
(73) Proprietor: AISIN SEIKI KABUSHIKI KAISHA, Kariya-shi, Aichi 448-8650 (JP)
(72) Inventor: AKI, Takuya, Kariya-shi, Aichi 448-8650 (JP); OKAWARA, Hiroki, Kariya-shi, Aichi 448-8650 (JP); SUZUKI, Goro, Kariya-shi, Aichi 448-8650 (JP)
(74) Representative: TBK

(56) References cited:
- EP-A1- 2 420 473
- EP-A1- 2 835 342
- EP-A2- 2 639 873
- EP-A2- 2 639 874
- WO-A1-2013/035606
- WO-A1-2014/073319
- US-A1- 2003 138 688
- US-A1- 2013 294 130

## Description

### TECHNICAL FIELD

This disclosure relates to a fuel cell system.

### BACKGROUND DISCUSSION

There is a fuel cell system disclosed in JP 2005-276757A (Reference 1) as a type of a known fuel cell system. As illustrated in Fig. 1 of Reference 1, the fuel cell system includes a fuel cell 30 into which fuel gas 3a and oxygen containing gas 61 a as oxidizer gas are supplied and which generates power by an electrical chemical reaction and produces water, gas-water separation units 83, 100 and 89 that cool down exhaust gas 63a discharged from the fuel cell 30 and separate moisture, exhaust gas temperature detection means 90 for detecting a temperature of exhaust gas 64a from which moisture is separated, and cooling adjusting means 130 for adjusting a heat quantity exchanged in the gas-water separation unit such that the temperature detected by the exhaust gas temperature detection means becomes less than or equal to a first predetermined temperature.

There was a concern for the fuel cell system described in Reference 1 described above that if the fuel cell system is operated at a low S/C in order to achieve high efficiency, a latent heat/sensible heat ratio, which is a ratio of sensible heat to latent heat becomes smaller in exhaust gas and a necessary and sufficient quantity of condensed water may not be generated.

### SUMMARY

Thus, a need exists for generating a necessary and sufficient quantity of condensed water in a fuel cell system.

A fuel cell system according to an aspect of this disclosure includes a fuel cell that generates power by fuel and oxidizer gas, a reforming unit that generates the fuel from a reforming raw material and reforming water and supplies the fuel to the fuel cell, a combustion unit that introduces combustible gas which contains unused fuel from the fuel cell thereinto, burns the combustible gas using oxidizer gas, and leads out the combustion exhaust gas, a hot water storage tank that stores stored hot water, a heat exchanger that performs heat exchange between the combustion exhaust gas and the stored hot water, condenses water vapor contained in the combustion exhaust gas, and produces condensed water, a stored hot water circulation line formed to circulate the stored hot water between the hot water storage tank and the heat exchanger, a delivery device that is provided in the stored hot water circulation line and delivers the stored hot water to be circulated, a heat exchanger stored hot water outlet temperature sensor that is provided between a stored hot water lead-out port of the heat exchanger and a stored hot water introduction port of the hot water storage tank in the stored hot water circulation line and detects the temperature of the stored hot water led out from the heat exchanger, and a control device that controls the delivery quantity of the delivery device. The control device includes a water self-sustaining non-establishment determination unit that determines whether a water self-sustaining state where a reforming water quantity required for the power generation in the fuel cell is covered by only the condensed water produced by the heat exchanger is established or not, a target temperature decrease setting unit that decreases a target temperature of a stored hot water outlet temperature of the heat exchanger in a case where it is determined, by the water self-sustaining non-establishment determination unit, that the water self-sustaining state is not established, and a delivery quantity control unit that controls the delivery quantity of the delivery device such that the temperature of the stored hot water led out from the heat exchanger becomes the target temperature which is set by the target temperature decrease setting unit.

According to the configuration of the aspect of this disclosure, in a case of non-establishment of the water self-sustaining state, the delivery quantity of the delivery device in the stored hot water circulation line is controlled such that the target temperature of the stored hot water outlet temperature is decreased (the temperature of the stored hot water led out from the heat exchanger). With this, it becomes possible to increase the condensed water produced in the heat exchanger and to effectively recover the latent heat. That is, it is possible to increase the condensed water produced by the heat exchanger in a case of non-establishment of the water self-sustaining state, in other words, even in a case where a latent heat/sensible heat ratio, which is a ratio of sensible heat to latent heat, is small in the combustion exhaust gas. Accordingly, it is possible to produce a necessary and sufficient quantity of condensed water.

The fuel cell system according to the aspect of this disclosure may further include a water tank that stores the condensed water supplied from the heat exchanger and supplies the condensed water to the reforming unit as the reforming water, and the water self-sustaining non-establishment determination unit may determine that the water self-sustaining state is not established, in a case where a water level in the water tank is lower than a determination water level.

In the fuel cell system according to the aspect of this disclosure, the water self-sustaining non-establishment determination unit may determine that the water self-sustaining state is not established from a sensible heat/latent heat ratio calculated from sensible heat and latent heat capable of being recovered from the combustion exhaust gas in the heat exchanger.

In the fuel cell system according to the aspect of this disclosure, the water self-sustaining non-establishment determination unit may determine that the water self-sustaining state is not established from a dew point of the combustion exhaust gas in the heat exchanger.

In the fuel cell system according to the aspect of this disclosure, the target temperature decrease setting unit may set the target temperature such that the sensible heat/latent heat ratio calculated from the sensible heat and the latent heat capable of being recovered from the combustion exhaust gas in the heat exchanger becomes a value with which the water self-sustaining state is established.

In the fuel cell system according to the aspect of this disclosure, the target temperature decrease setting unit may set the target temperature such that an exhaust heat recovery water inlet temperature serves as a rate limiting factor for the heat exchange capability of the heat exchanger.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating an outline of a fuel cell system of an embodiment disclosed here;
Fig. 2 is a flowchart of a control program (first control example) executed by a control device illustrated in Fig. 1;
Fig. 3 is a diagram illustrating temperatures of combustion exhaust gas and stored hot water in a heat exchanger in a case where a sensible heat/latent heat ratio is small, where the combustion exhaust gas is indicated by a solid line and the stored hot water is indicated by a dotted line;
Fig. 4 is a diagram illustrating temperatures of the combustion exhaust gas and the stored hot water in the heat exchanger in a case where the sensible heat/latent heat ratio is large, where the combustion exhaust gas is indicated by a solid line and the stored hot water is indicated by a dotted line;
Fig. 5 is a diagram illustrating a correlation between the sensible heat/latent heat ratio and a temperature difference ΔT (water balance);
Fig. 6 is a diagram illustrating temperatures of the combustion exhaust gas and the stored hot water in the heat exchanger to which this disclosure is applied in a case where the sensible heat/latent heat ratio is large, where the combustion exhaust gas is indicated by a solid line and the stored hot water is indicated by a dotted line;
Fig. 7 is a flowchart of a control program (second control example) executed by the control device illustrated in Fig. 1; and
Fig. 8 is a flowchart of a control program (third control example) executed by the control device illustrated in Fig. 1.

### DETAILED DESCRIPTION

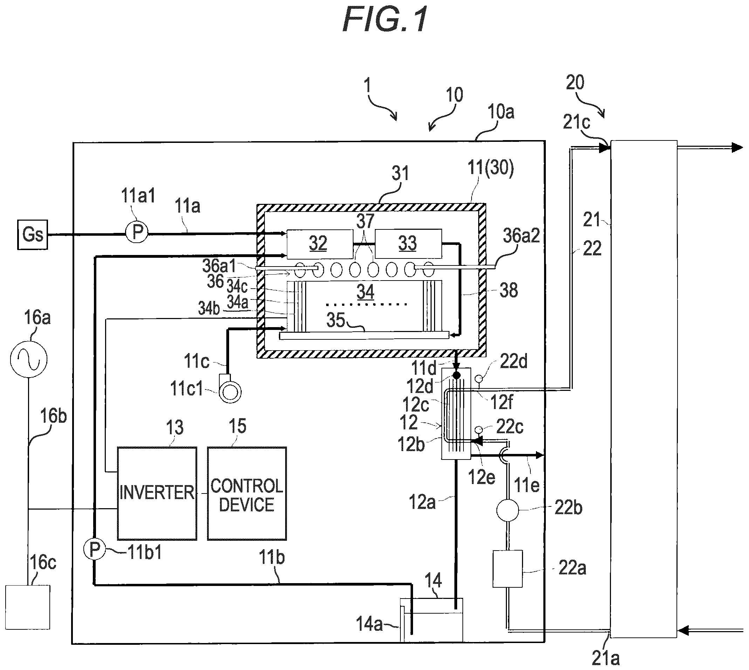

Hereinafter, an embodiment of a fuel cell system 1 disclosed here will be described. As illustrated in Fig. 1, the fuel cell system 1 includes a power generation unit 10 and a hot water storage tank 21. The power generation unit 10 includes a case 10a, a fuel cell module 11 (30), a heat exchanger 12, an inverter device 13, a water tank 14, and a control device 15. The fuel cell module 11 (30), the heat exchanger 12, the inverter device 13, the water tank 14, and the control device 15 are accommodated in the case 10a.

The fuel cell module 11 is configured to include at least a fuel cell 34 which will be described later. A reforming raw material, reforming water, and cathode air are supplied to the fuel cell module 11. Specifically, the fuel cell module 11 is connected to the other end of the reforming raw material supply pipe 11 a of which one end is connected to a supply source Gs to be supplied with the reforming raw material. The reforming raw material supply pipe 11 a is provided with a raw material pump 11a1. Furthermore, the fuel cell module 11 is connected to the other end of a water supply pipe 11 b of which one end is connected to the water tank 14 to be supplied with the reforming water. The water supply pipe 11 b is provided with a reforming water pump 11 b1. The fuel cell module 11 is connected to the other end of a cathode air supply pipe 11c of which one end is connected to a cathode air blower 11c1 to be supplied with cathode air.

The heat exchanger 12 is a heat exchanger to which the combustion exhaust gas discharged from the fuel cell module 11 and stored hot water from the hot water storage tank 21 are supplied and in which heat exchange is performed between the combustion exhaust gas (containing exhaust heat of each of the fuel cell 34 and the reforming unit 33) and the stored hot water. Furthermore, the heat exchanger 12 performs the heat exchange between the combustion exhaust gas and the stored hot water, condenses water vapor contained in the combustion exhaust gas, and produces the condensed water. The stored hot water is a heat medium (exhaust heat recovering water) which recovers exhaust heat of the combustion exhaust gas.

Specifically, the hot water storage tank 21 stores hot water and is connected with a stored hot water circulation line 22 in which the stored hot water is circulated (circulates in a direction denoted by an arrow in the figure). A radiator 22a, a stored hot water circulating pump 22b, a heat exchanger stored hot water inlet temperature sensor 22c, a heat exchanger 12, and a heat exchanger stored hot water outlet temperature sensor 22d are arranged on the stored hot water circulation line 22 in this order from a lower end toward an upper end.

The heat exchanger 12 includes a casing 12b. An exhaust pipe 11 d from the fuel cell module 11 is connected to an upper part of the casing 12b. An exhaust pipe 11e connected to outside (atmosphere) is connected to a lower part of the casing 12b. A condensed water supply pipe 12a connected to the water tank 14 is connected to the bottom part of the casing 12b. A combustion exhaust gas flow passage through which the combustion exhaust gas passes is formed within the casing 12b. The heat exchange unit (condensation unit) 12c connected to the stored hot water circulation line 22 is arranged in the combustion exhaust gas flow passage. The stored hot water flows within the heat exchange unit 12c and the combustion exhaust gas flows outside of the heat exchange unit 12c. The heat exchanger 12 may be configured so that the stored hot water and the combustion exhaust gas flow in different directions that are opposite to each other.

In the heat exchanger 12 configured as described above, the combustion exhaust gas from the fuel cell module 11 is introduced into the casing 12b through the exhaust pipe 11 d. When the combustion exhaust gas passes through the heat exchange unit 12c through which the stored hot water passes, the combustion exhaust gas is subjected to the heat exchange with the stored hot water, condensed, and cooled down. Thereafter, the combustion exhaust gas is discharged to the outside through the exhaust pipe 11e. The condensed water is supplied to the water tank 14 through the condensed water supply pipe 12a (water drops by its own weight). On the other hand, the stored hot water flowed into the heat exchange unit 12c is heated and flowed out.

A temperature sensor 12d which detects a temperature (heat exchanger combustion exhaust gas inlet temperature) of the combustion exhaust gas introduced is provided within the heat exchanger 12 (casing 12b). The temperature sensor 12d is preferably provided in the vicinity of the introduction port (in the vicinity of connection portion with the exhaust pipe 11 d) of the combustion exhaust gas flow passage. A detection result of the temperature sensor 12d is transmitted to the control device 15. The temperature sensor 12d may be provided in the exhaust pipe 11 d.

An exhaust heat recovery system 20 is constituted with the heat exchanger 12 described above, the hot water storage tank 21 and the stored hot water circulation line 22. The exhaust heat recovery system 20 recovers the exhaust heat of the fuel cell module 11 into the stored hot water to be accumulated.

The hot water storage tank 21 is a sealing type container. The hot water storage tank 21 is a pressure proof type container. The temperature distribution within the hot water storage tank 21 is basically divided into two layers of different temperatures. The upper layer is a layer of a relatively higher temperature (for example, 50 degrees or more) and the lower layer is a layer of a relatively lower temperature (for example, 20 degrees or less (temperature of tap water)). The respective upper layer and lower layer have substantially the same temperature.

The radiator 22a is a cooling device that cools down the heat medium (stored hot water) circulating in the stored hot water circulation line 22 and is controlled to be turned on or off by instruction from the control device 15 in such a way that the heat medium is cooled down in an on state and is not cooled down in an off state. The radiator 22a includes a heat exchange unit (not illustrated) in which heat exchange is performed between a heat medium and air and a cooling fan (not illustrated) which performs air cooling of the heat exchanger.

The stored hot water circulating pump 22b is a delivery device that delivers the heat medium (stored hot water) of the stored hot water circulation line 22 and circulates the heat medium in an arrow direction illustrated, and is controlled by the control device 15 to allow the discharge quantity (delivery quantity) to be controlled.

The heat exchanger stored hot water inlet temperature sensor 22c is provided between the stored hot water lead-out port 21 a of the hot water storage tank 21 and the stored hot water introduction port 12e of the heat exchanger 12 in the stored hot water circulation line 22. The heat exchanger stored hot water inlet temperature sensor 22c detects the temperature of the stored hot water introduced into the heat exchanger 12 and transmits the detected temperature to the control device 15.

The heat exchanger stored hot water outlet temperature sensor 22d is provided between the stored hot water lead-out port 12f of the heat exchanger 12 and the stored hot water introduction port 21c of the hot water storage tank 21 in the stored hot water circulation line 22. The heat exchanger stored hot water outlet temperature sensor 22d is preferably provided in the vicinity of the stored hot water lead-out port 12f of the heat exchanger 12. The heat exchanger stored hot water outlet temperature sensor 22d detects the temperature of the stored hot water led out from the heat exchanger 12 and transmits the detected temperature to the control device 15. The temperature sensor provided within the heat exchanger 12 and detecting the temperature of the stored hot water led out from the heat exchanger 12 (especially, temperature of the stored hot water lead-out port 12f side of the heat exchanger 12) may be used, instead of the heat exchanger stored hot water outlet temperature sensor 22d.

The inverter device 13 receives DC voltage which is output from the fuel cell 34 as an input, converts the input DC voltage into a predetermined AC voltage, and outputs the predetermined AC voltage to the power supply line 16b connected to the AC system power source 16a and an external power load 16c (for example, electrical products). The inverter device 13 receives the AC voltage from the system power source 16a through the power supply line 16b as an input, converts the input AC voltage into a predetermined DC voltage, and outputs the predetermined DC voltage to an auxiliary machine (each pump, blower, or the like) and the control device 15.

The water tank 14 may store the condensed water supplied from the heat exchanger 12 and supply the condensed water to the reforming unit 33 as the reforming water. The water level sensor 14a which detects a water level (water quantity) within the water tank 14 is arranged within the water tank 14. The detection result of the water level sensor 14a is output to the control device 15. The water level sensor 14a is, for example, a float type sensor and is a sensor that displays the water level (remaining water quantity) by converting an amount of the water in the upper level and an amount of the water in the lower level of a float into a resistance value by a variable resistance (potentiometer). The water tank 14 purifies the condensed water by ion exchange resin.

The control device 15 controls the auxiliary machine to operate the fuel cell system 1.

The fuel cell module 11 (30) includes the casing 31, the evaporating unit 32, the reforming unit 33, and the fuel cell 34. The casing 31 is formed of an insulating material in a box shape.

The evaporating unit 32 is heated by combustion gas to be described later, evaporates the supplied reforming water, and produces water vapor, and preheats the supplied reforming raw material. The evaporating unit 32 mixes the produced water vapor and the preheated reforming raw material to be supplied to the reforming unit 33. The reforming raw material includes natural gas (containing methane gas as main component), a reforming gas fuel such as LP gas, and a reforming liquid fuel such as kerosene, gasoline, and methanol, and description will be made on natural gas in the embodiment disclosed here.

The evaporating unit 32 is connected to the other end of the water supply pipe 11b of which one end (lower end) is connected to the water tank 14. The evaporating unit 32 is connected to the reforming raw material supply pipe 11a of which one end is connected to the supply source Gs. The supply source Gs is, for example, a gas supply pipe of a city gas and a gas pump of LP gas.

The reforming unit 33 produces reforming gas from the mixed gas (reforming raw material and water vapor) supplied from the evaporating unit 32 and leads out reforming gas by being supplied with heat required for a reforming reaction of water vapor heated by the combustion gas described above. The reforming unit 33 is filled with the catalyst (for example, Ru or Ni based catalyst) and hydrogen gas reformed through reaction of the mixed gas by the catalyst and gas containing carbon monoxide are produced (so-called water vapor reforming reaction). The reforming gas contains hydrogen, carbon monoxide, carbon dioxide, water vapor, unreformed natural gas (methane gas), and the reforming water (water vapor) not used for reforming. As such, the reforming unit 33 produces reforming gas (fuel) made of the reforming raw material (raw material) and the reforming water and supplies the reforming gas to the fuel cell 34. The water vapor reforming reaction is an endothermic reaction.

The fuel cell 34 is configured by being stacked with a plurality of cells 34a, each of which is formed with a fuel electrode, an air electrode (oxidizer electrode), and an electrolyte sandwiched between both electrodes. The fuel cell of the present embodiment is a solid oxide type fuel cell, and zirconium oxide which is a type of solid oxide as the electrolyte is used. The hydrogen, the carbon monoxide, and the methane gas or the like are supplied to the fuel electrode of the fuel cell 34 as a fuel. The operating temperature is approximately 400°C to 1000°C.

The fuel flow passage 34b through which the reforming gas, which is a fuel, flows is formed at the fuel electrode side of the cell 34a. The air flow passage 34c through which air (cathode air), which is the oxidizer gas, flows is formed at the air electrode of the cell 34a.

The fuel cell 34 is provided on the manifold 35. The reforming gas (anode gas) from the reforming unit 33 is supplied to the manifold 35 through the reforming gas supply pipe 38. The fuel flow passage 34b is formed in such a way that a lower end (one end) of the fuel flow passage 34b is connected to the fuel lead-out port of the manifold 35 and the reforming gas led out from the fuel lead-out port is introduced from the lower end and led out from the upper end. The cathode air delivered by the cathode air blower 11c1 is supplied through the cathode air supply pipe 11c and is introduced from the lower end of the air flow passage 34c and led out from the upper end thereof.

In the fuel cell 34, power is generated by the anode gas supplied to the fuel electrode and the oxidizer gas (cathode gas) supplied to the air electrode. That is, a reaction expressed by the following chemical formula 1 and chemical formula 2 occurs in the fuel electrode and a reaction expressed by the following chemical formula 3 occurs in the air electrode. That is, an oxide ion (O²⁻) produced in the air electrode is transmitted through the electrolyte and reacts with hydrogen in the fuel electrode and thus, electrical energy is generated. Therefore, reforming gas and the oxidizer gas (air) that have not been used for power generation are led out from the fuel flow passage 34b and the air flow passage 34c.

H₂ + O²⁻ → H₂O + 2e⁻ (chemical formula 1)

CO + O²⁻ → CO₂ + 2e⁻ (chemical formula 2)

1/2O₂ + 2e⁻ → O²⁻ (chemical formula 3)

The reforming gas (anode off gas) that was not used for power generation is led out from the fuel flow passage 34b to a combustion space 36 (formed between fuel cell 34 and evaporating unit 32 (reforming unit 33)). The oxidizer gas (air: cathode off gas) not used for generating power is led out from the air flow passage 34c to the combustion space 36. In the combustion space 36, the anode off gas is burned by the cathode off gas and the evaporating unit 32 and the reforming unit 33 are heated by the burned gas. Furthermore, the inside of the fuel cell module 11 is heated to a temperature of the operating temperature. Thereafter, the burned gas is discharged from an exhaust pipe 11 d provided in the lower part of the casing 12b to the outside of the fuel cell module 11 as combustion exhaust gas. As such, the combustion space 36, into which combustible gas (anode off gas) containing unused fuel (reforming gas) is introduced from the fuel cell 34, in which the combustible gas is burned by the oxidizer gas, and from which the combustion exhaust gas (which contains water vapor) is led out, is a combustion unit.

In the combustion unit 36, the anode off gas is burned and a flame 37 (combustion gas) is generated. In the combustion unit 36, the anode off gas is burned and combustion gas is generated. In the combustion unit 36, a pair of ignition heaters 36a1 and 36a2 is provided in order to ignite the anode off gas.

The control device 15 integrally controls operation of the fuel cell system 1. The control device 15 adjusts the delivery quantity of the stored hot water circulating pump 22b. The control device 15 includes a microcomputer (not illustrated). The microcomputer includes an input/output interface, a CPU, a RAM, and a ROM (all of them are not illustrated) that are connected with each other through a bus. The CPU performs integral operation of the fuel cell system 1. The RAM is for temporarily storing variables needed for execution of a control program and the ROM may also store the control program.

### <First control example>

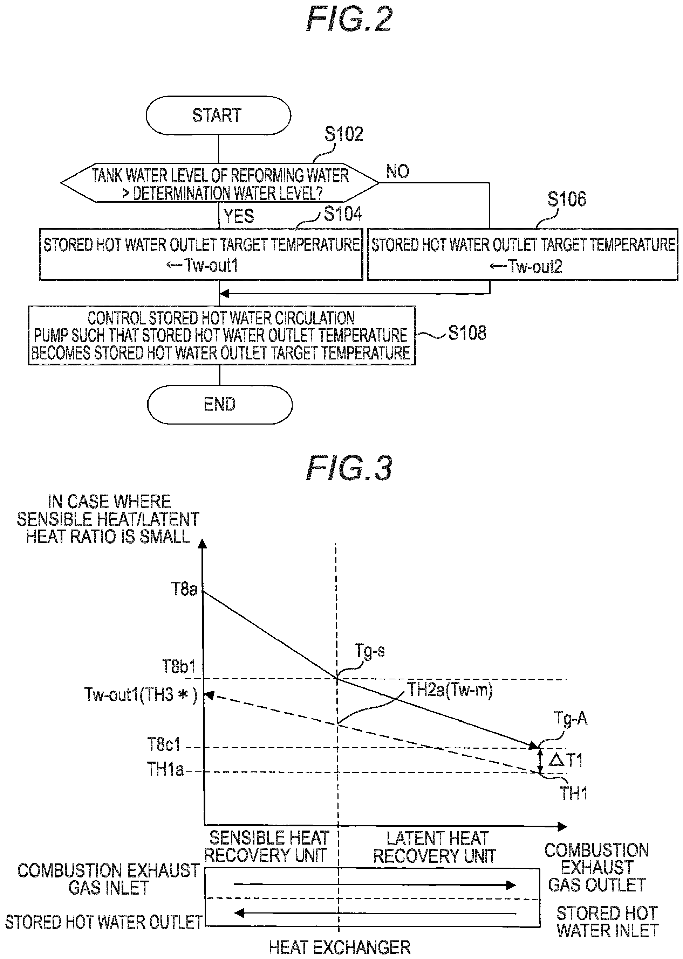

Next, operations of the fuel cell system 1 described above (first control example) will be described in line with a flowchart illustrated in Fig. 2. The control device 15 repeatedly executes a program in line with the flowchart every predetermined period of time (in a short period of time or a long period of time).

In Step S102, the control device 15 determines whether water self-sustaining state capable of covering a reforming water quantity required for the power generation of the fuel cell 34 with only the condensed water produced by the heat exchanger 12 is established or not (water self-sustaining non-establishment determination unit).

Specifically, in a case where the water level of the water tank 14 acquired from the water level sensor 14a is lower than the determination water level, the control device 15 determines that the water self-sustaining state is not established (water self-sustaining non-establishment determination unit: Step S102). In a case where the water self-sustaining state is not established, that is, in a case where the reforming water quantity used for power generation is larger than the condensed water quantity produced in the heat exchanger 12, the water level of the water tank 14 becomes lower than the determination water level. Accordingly, in a case where the water level of the water tank 14 is lower than the determination water level, it is possible to determine that the water self-sustaining state is not established.

In a case where the water level in the water tank 14 acquired from the water level sensor 14a drops, the control device 15 may determine that the water self-sustaining state is not established. In this case, if the water level dropping speed becomes larger than the determination value, it may be determined that the water self-sustaining state is not established.

In a case where it has been determined, by Step S102 (water self-sustaining establishment determination unit) that the water self-sustaining state is not established (determination result in Step S102 is "NO"), the control device 15, in Step S106, decreases a target temperature TH3* of the stored hot water outlet temperature (heat exchanger stored hot water outlet temperature) of the heat exchanger 12 (target temperature decrease setting unit). For example, the target temperature TH3* of the heat exchanger stored hot water outlet temperature is set to a second set temperature Tw - out2. The second set temperature Tw - out2 is set to a temperature which is lower than a first set temperature Tw - out1 which is set in a case where water self-sustaining state of the fuel cell system 1 is established.

In Step S108, the control device 15 (delivery quantity control unit) controls the delivery quantity of the stored hot water circulating pump 22b such that the target temperature becomes the target temperature TH3* (second set temperature Tw - out2) which is set in Step S106 (target temperature decrease setting unit).

On the other hand, in a case where it is determined, by Step S102 (water self-sustaining establishment determination unit), that the water self-sustaining state is established (determination result in Step S102 is "YES"), the control device 15 (target temperature increase setting unit), in Step S104, increases the target temperature TH3* of the stored hot water outlet temperature of the heat exchanger 12 (heat exchanger stored hot water outlet temperature). For example, the target temperature TH3* of the heat exchanger stored hot water outlet temperature is set to the first set temperature Tw - out1.

In Step S108, the control device 15 (delivery quantity control unit) controls the delivery quantity of the stored hot water circulating pump 22b such that the target temperature becomes the target temperature TH3* (first set temperature Tw - out1) which is set in Step S104 (target temperature increase setting unit).

The behavior within the heat exchanger 12 will be described prior to describing an effect of the fuel cell system 1 controlled as described above. Initially, as illustrated in Fig. 3, description will be made on a case where the sensible heat/latent heat ratio is small, that is, a case where water vapor among the combustion exhaust gas is relatively high. The sensible heat/latent heat ratio is a ratio of sensible heat to latent heat.

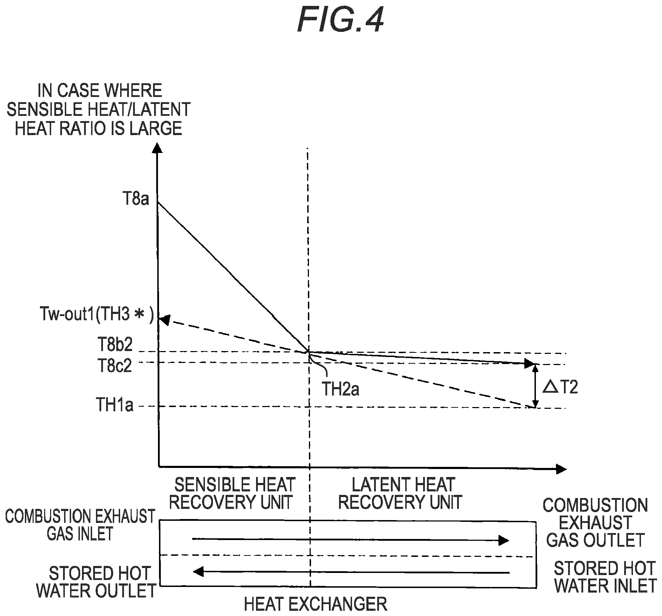

In Fig. 3 and Fig. 4, a flow (countercurrent) of the combustion exhaust gas and the stored hot water within the heat exchanger 12 is represented in the horizontal axis and a temperature of the combustion exhaust gas and the stored hot water is represented in the vertical axis. The combustion exhaust gas flows into from the combustion exhaust gas inlet port, the temperature of the combustion exhaust gas is decreased while being subjected to heat exchange with the stored hot water within the heat exchanger 12, and is finally flowed out from the combustion exhaust gas outlet (flows from the left to the right in Fig. 3). On the other hand, the stored hot water flows into from the stored hot water inlet, the temperature of the stored hot water is increased while being subjected to heat exchange with the combustion exhaust gas within the heat exchanger 12, and is finally flowed out from the stored hot water outlet (flows from the right to the left in Fig. 3). In this case, a sensible heat recovery unit which is a portion to recover sensible heat of which a temperature is up to the dew point of the combustion exhaust gas and a latent heat recovery unit which is a portion to recover latent heat (also recover sensible heat) of which a temperature is less than or equal to the dew point of the combustion exhaust gas are present within the heat exchanger 12.

The sensible heat is a heat quantity required for changing a temperature of matter without changing a state of matter. The latent heat is a heat quantity which is absorbed or emitted without causing a change of temperature when changing the state of matter. Heat supplied for decreasing of the temperature of the combustion exhaust gas is a sensible heat load and heat supplied when water vapor of the combustion exhaust gas is condensed is a latent heat load.

In a case where the sensible heat/latent heat ratio is small, the stored hot water inlet temperature TH1 serves as a rate limiting condition and the combustion exhaust gas outlet temperature T8c is able to be decreased to less than or equal to a predetermined temperature difference ΔT1 with respect to the stored hot water inlet temperature TH1. In this case, the combustion exhaust gas outlet temperature T8c is T8c1 and the stored hot water inlet temperature TH1 is TH1a (T8c1 = TH1a + ΔT1). The predetermined temperature difference ΔT1 is a temperature difference with which water self-sustaining state becomes possible. Since the sensible heat/latent heat ratio is small, the combustion exhaust gas outlet temperature T8b1 of the sensible heat recovery unit is high and latent heat can be sufficiently recovered with respect to the stored hot water inlet temperature TH2a of the sensible heat recovery unit. Accordingly, it is possible to sufficiently decrease the temperature of the combustion exhaust gas. The target temperature TH3* of the stored hot water outlet temperature TH3 is set to the first set temperature Tw - out1.

On the other hand, as illustrated in Fig. 4, description will be made on a case where the sensible heat/latent heat ratio is large, that is, water vapor contained in the combustion exhaust gas moisture is relatively small. In the case where the sensible heat/latent heat ratio is large, the target temperature TH3* of the stored hot water outlet temperature TH3 is set to the first set temperature Tw - out1 which is the same as that in the case where the sensible heat/latent heat ratio is small. In this case, since the sensible heat/latent heat ratio is large, the combustion exhaust gas outlet temperature T8b of the sensible heat recovery unit is decreased compared to a case where the sensible heat/latent heat ratio is small and thus becomes T8b2 which is lower than T8b1. The combustion exhaust gas outlet temperature T8b2 of the sensible heat recovery unit becomes substantially the same as the stored hot water inlet temperature TH2a of the sensible heat recovery unit. Accordingly, in a case where the heat exchanger stored hot water outlet temperature TH3 is controlled to be the first set temperature Tw - out1, the combustion exhaust gas inlet temperature T8b2 of the latent heat recovery unit becomes substantially the same as the stored hot water outlet temperature TH2a of the latent heat recovery unit and thus, the dew point of the combustion exhaust gas temperature serves as a rate limiting condition. The dew point of the combustion exhaust gas is T8b2. In this case, since an amount of latent heat recovery with respect to the quantity of heat imparted and received of the stored hot water of the latent heat recovery unit becomes excessively large, the latent heat is not sufficiently recovered and a temperature difference ΔT between the combustion exhaust gas outlet temperature T8c of the latent heat recovery unit and the stored hot water inlet temperature of the latent heat recovery unit is increased from ΔT1 to ΔT2. Accordingly, the condensed water quantity produced is decreased compared to a required reforming water quantity and water self-sustaining state becomes non-establishment.

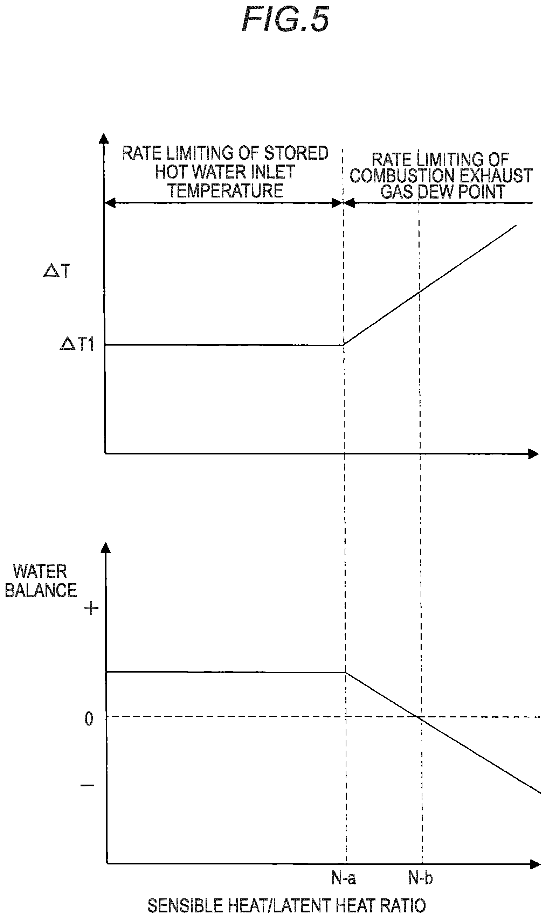

In Fig. 5, a correlation between the sensible heat/latent heat ratio and a temperature difference ΔT is illustrated. As illustrated in Fig. 5, in a case where the sensible heat/latent heat ratio is less than or equal to the N - a, since the heat exchanger stored hot water inlet temperature serves as a rate limiting condition, the temperature difference ΔT is ΔT1 and the water balance becomes positive. On the other hand, in a case where the sensible heat/latent heat ratio is larger than the N - a, since the combustion exhaust gas dew point serves as a rate limiting condition, the temperature difference ΔT is increased to be larger than ΔT1 and the water balance is decreased. If the sensible heat/latent heat ratio becomes equal to or larger than the N - b, the water balance becomes negative (that is, the water self-sustaining state becomes non-establishment). N - b > N - a is established. In a case where the water balance is positive, the water self-sustaining state is established.

Since the fuel cell system 1 intends to attain high power generation efficiency, the fuel cell system 1 is preferably configured such that power generation is performed with a small quantity of the fuel, generating exhaust heat is able to be effectively utilized in the fuel cell module 11, or the like. However, in such a case, the sensible heat/latent heat ratio becomes larger. The reason that the sensible heat/latent heat ratio becomes larger is that whether the combustion exhaust gas dew point is a rate limiting condition is determined by the sensible heat/latent heat ratio. Accordingly, for example, it is not possible to solve the problem described above by design change such as increasing the capacity of the heat exchanger 12 or the like.

In this respect, the present inventors found out that in a case where the water self-sustaining state is non-establishment, production of the condensed water is increased and the water self-sustaining state is established by changing the target temperature TH3* of the heat exchanger stored hot water outlet temperature such that the dew point of the combustion exhaust gas does not become a rate limiting condition.

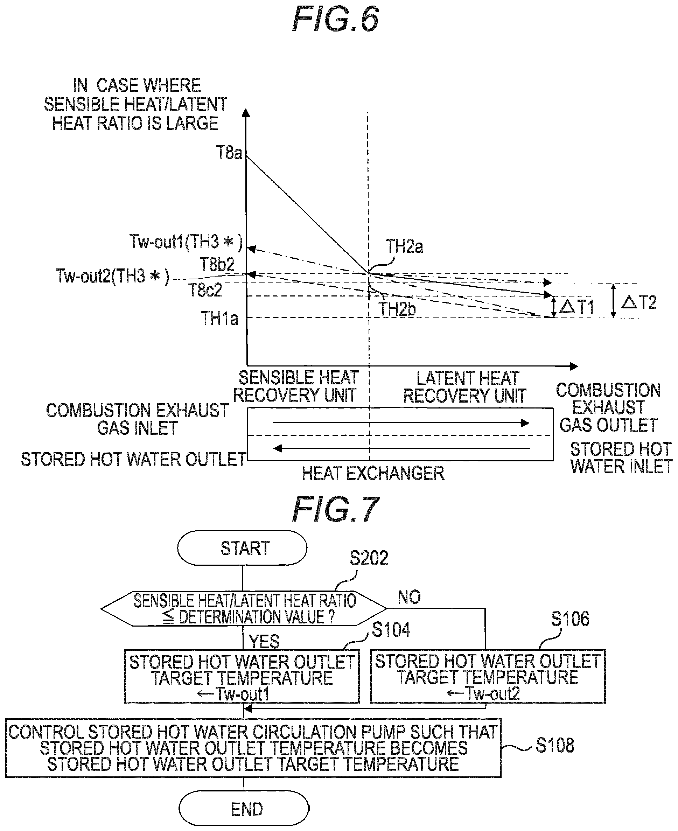

Specifically, as illustrated in Fig. 6, the target temperature TH3* of the heat exchanger stored hot water outlet temperature is decreased (reduced) from the first set temperature Tw - out1 to the second set temperature Tw - out2. With this, the stored hot water inlet temperature TH2 of the sensible heat recovery unit is decreased from the TH2a to the TH2b. That is, the stored hot water inlet temperature TH2 of the sensible heat recovery unit is decreased to be lower than the combustion exhaust gas outlet temperature T8b of the sensible heat recovery unit (T8b2 > TH2b). Accordingly, it is possible to come out of the combustion exhaust gas dew point rate limiting condition and becomes able to be a rate limiting condition of the stored hot water outlet temperature of the heat exchanger 12. As a result, the temperature difference ΔT becomes a predetermined temperature difference ΔT1 and production of the condensed water is increased and thus, the water self-sustaining state is able to be established. In Fig. 6, similar to Fig. 3, a flow (countercurrent) of the combustion exhaust gas and the stored hot water within the heat exchanger 12 is represented in the horizontal axis and a temperature of the combustion exhaust gas and the stored hot water is represented in the vertical axis.

The second set temperature Tw - out2 is, for example, from the map illustrated in Fig. 5, set to a temperature at which water balance is not negative in the combustion exhaust gas dew point rate limiting factor.

As is clarified from the above description, the fuel cell system 1 of the present embodiment includes a fuel cell 34 that generates power by fuel and oxidizer gas, the reforming unit 33 that generates the fuel from a reforming raw material and reforming water and supplies the fuel to the fuel cell 34, the combustion unit 36 that introduces combustible gas which contains unused fuel from the fuel cell 34 thereinto, burns the combustible gas using oxidizer gas, and leads out the combustion exhaust gas, the hot water storage tank 21 that stores stored hot water, the heat exchanger 12 that performs heat exchange between the combustion exhaust gas and the stored hot water, condenses water vapor contained in the combustion exhaust gas, and produces condensed water, the stored hot water circulation line 22 formed to circulate the stored hot water between the hot water storage tank 21 and the heat exchanger 12, a delivery device (the stored hot water circulating pump 22b) which is provided in the stored hot water circulation line 22 and delivers the stored hot water to be circulated, the heat exchanger stored hot water outlet temperature sensor 22d which is provided between the stored hot water lead-out port of the heat exchanger 12 and the stored hot water introduction port of the hot water storage tank 21 in the stored hot water circulation line 22 and detects the temperature of the stored hot water led out from the heat exchanger 12, and a control device 15 that controls a delivery quantity of the stored hot water circulating pump 22b. The control device 15 includes a water self-sustaining non-establishment determination unit (Step S102) that determines whether a water self-sustaining state where a reforming water quantity required for the power generation in the fuel cell 34 is covered by only the condensed water produced by the heat exchanger 12 is established or not, a target temperature decrease setting unit (Step S106) that decreases a target temperature of the stored hot water outlet temperature of the heat exchanger 12 in a case where it is determined, by the water self-sustaining non-establishment determination unit (Step S102), that the water self-sustaining state is not established, and a delivery quantity control unit (Step S108) that controls the delivery quantity of the stored hot water circulating pump 22b such that the target temperature becomes the target temperature which is set by the target temperature decrease setting unit (Step S106).

Accordingly, in a case of non-establishment of the water self-sustaining state, the delivery quantity of the stored hot water circulating pump 22b of the stored hot water circulation line 22 is controlled such that the target temperature TH3* of the stored hot water outlet temperature and the stored hot water outlet temperature TH3 are decreased. With this, it becomes possible to increase the condensed water produced in the heat exchanger 12 and to effectively recover the latent heat. That is, it is possible to increase the condensed water produced by the heat exchanger 12 in a case of non-establishment of the water self-sustaining state, in other words, even in a case where a latent heat/sensible heat ratio, which is a ratio of latent heat to sensible heat, is small in the combustion exhaust gas. Accordingly, it is possible to produce a necessary and sufficient quantity of condensed water.

The fuel cell system 1 of the present embodiment further includes a water tank 14 which stores the condensed water supplied from the heat exchanger 12 and supplies the condensed water to the reforming unit 33 as reforming water. In a case where the water level of the water tank 14 is lower than the determination water level, the water self-sustaining non-establishment determination unit (Step S102) determines that the water self-sustaining state is not established.

Accordingly, it is possible to detect, with a simple configuration, that the water self-sustaining state is not established.

Furthermore, in the fuel cell system 1 of the present embodiment, the control device 15 sets the target temperature TH3* of the stored hot water outlet temperature (Step S106: target temperature decrease setting unit) such that the sensible heat/latent heat ratio calculated from the sensible heat/latent heat capable of being recovered from the combustion exhaust gas in the heat exchanger 12 becomes a value with which the water self-sustaining state is established. In this case, for example, the target temperature TH3* is set to the second set temperature Tw - out2.

Accordingly, in a case where the water self-sustaining state is non-establishment, it is possible to reliably decrease the target temperature TH3* of the stored hot water outlet temperature and to increase the condensed water produced in the heat exchanger 12.

Further, in the fuel cell system 1 of the present embodiment, the control device 15 sets the target temperature TH3* of the stored hot water outlet temperature (Step S106: target temperature decrease setting unit) such that heat exchange capability of the heat exchanger 12 causes the exhaust heat recovering water inlet temperature to become a rate limiting factor. In this case, for example, the target temperature TH3* is set to the second set temperature Tw - out2.

Accordingly, in a case where the water self-sustaining state is non-establishment, it is possible to reliably decrease the target temperature TH3* of the stored hot water outlet temperature and to increase the condensed water produced in the heat exchanger 12.

### <Second Control Example>

Next, operations of the fuel cell system 1 described above (second control example) will be described in line with a flowchart illustrated in Fig. 7. The second control example is different from the first control example in the following points. The water self-sustaining non-establishment determination unit of the first control example (Step S102) determines non-establishment of water self-sustaining state from the water level of the water tank 14 but, the water self-sustaining non-establishment determination unit of the second control example (Step S202) determines non-establishment of water self-sustaining state from the sensible heat/latent heat ratio calculated from the sensible heat/latent heat which is recoverable from the combustion exhaust gas in the heat exchanger 12. The same processing as those of the first control example will be denoted by the same reference numeral and description thereof will be omitted.

The control device 15, in Step S202, calculates the sensible heat/latent heat ratio, and in a case where the calculated sensible heat/latent heat ratio is larger than the determination value, determines that the water self-sustaining state is not established (water self-sustaining non-establishment determination unit). For example, in a case where the determination value is set to the N - b, and a case where the sensible heat/latent heat ratio is larger than the N- b, the water self-sustaining state becomes non-establishment (see Fig. 5).

A calculation method of sensible heat, latent heat, and the sensible heat/latent heat ratio will be described. The composition of the combustion exhaust gas is calculated from the flow rate of each of the fuel, the reforming water, and the cathode air provided to the fuel cell module 11. The composition of the combustion exhaust gas is calculated on the assumption that the fuel provided is completely burned and only carbon dioxide and water are produced (for example, in a case where the fuel is methane, the combustion reaction formula is CH₄ + 2O₂ → CO₂ + 2H₂O). Nitrogen is contained in the cathode air. The combustion exhaust gas is composed of oxygen, nitrogen, carbon dioxide, water (gas) and a composition of the combustion exhaust gas is calculated from each flow rate of the provided fuel, the reforming water, and the cathode air.

Furthermore, the water vapor ratio of the combustion exhaust gas (water vapor partial pressure, saturated water vapor pressure) Rh is calculated from the composition of the combustion exhaust gas.

Further, the sensible heat W - a is calculated from the saturated water vapor curve, the water vapor ratio Rh, and the combustion exhaust gas inlet temperature T8a of the heat exchanger 12. Specifically, the dew point Tg - s corresponding to the initially calculated water vapor ratio Rh is calculated. That is, an intersection of calculated water vapor ratio Rh and saturated water vapor curve is the dew point Tg - s. In a case where a temperature of the water vapor existing in the combustion exhaust gas is decreased to the dew point Tg - s corresponding to the water vapor ratio Rh calculated from the combustion exhaust gas inlet temperature T8a of the heat exchanger 12, the sensible heat W - a corresponds to a heat quantity corresponding to the decrease of the temperature. Accordingly, the sensible heat W - a is calculated from specific heat (combustion exhaust gas) x flow rate (total flow rate of combustion exhaust gas) x (combustion exhaust gas inlet temperature T8a - dew point Tg - s).

The sensible heat W - a is recovered into the exhaust heat recovering water (stored hot water) and a temperature of the exhaust heat recovering water rises in the sensible heat recovery unit of the heat exchanger 12. That is, heat used for the temperature rise is equal to the sensible heat W - a. Accordingly, the equation of: sensible heat W - a = specific heat (stored hot water (water)) x flow rate Q (flow rate of stored hot water) x (heat exchanger stored hot water outlet temperature TH3* (for example, 70°C) - sensible heat recovery unit stored hot water inlet temperature Tw - m) is established. The flow rate Q may also be a controlled flow rate and may be a value which is set in advance (for example, initial value).

The heat quantity (referred to as exchange heat quantity) with which the exhaust heat recovering water is able to be recovered (exchanged) from the combustion exhaust gas is calculated in the latent heat recovery unit of the heat exchanger 12. The exchange heat quantity may be calculated by the equation of: specific heat (stored hot water (water)) x the flow rate Q (flow rate of stored hot water) x ((sensible heat recovery unit stored hot water inlet temperature Tw - m) - heat exchanger stored hot water inlet temperature TH1 (for example, 20°C)).

On the other hand, the exchange heat quantity is equal to a heat quantity corresponding to the decrease of the temperature of the combustion exhaust gas in the latent heat recovery unit of the heat exchanger 12. Accordingly, the following equation of: exchange heat quantity = specific heat (combustion exhaust gas) x flow rate (total flow rate of combustion exhaust gas) x (dew point Tg - s - combustion exhaust gas outlet temperature Tg - A) is established. From the above equation, the equation of the combustion exhaust gas outlet temperature Tg - A = dew point Tg - s - (exchange heat quantity / (specific heat (combustion exhaust gas) x flow rate (total flow rate of combustion exhaust gas))) is derived.

The condensed water quantity, which is condensed in a case where the temperature falls from the dew point Tg - s to the combustion exhaust gas outlet temperature Tg - A, is calculated in the water vapor ratio Rh which is the same as that obtained when the sensible heat was calculated before using the saturated water vapor curve. The latent heat is able to be calculated from the calculated condensed water quantity using the following equation: latent heat = vaporization heat (kJ/mol) x condensed water quantity (mol/sec) x 1000. The vaporization heat of water is -40.66.

Further, the sensible heat/latent heat ratio is calculated from sensible heat and latent heat calculated as described above. Examples of the dew point Tg - s and the sensible heat recovery unit stored hot water inlet temperature Tw - m are illustrated in Fig. 3.

According to the second control example, the control device 15 (water self-sustaining non-establishment determination unit) determines that water self-sustaining state is not established from the sensible heat/latent heat ratio calculated from the sensible heat/latent heat capable of being recovered from the combustion exhaust gas in the heat exchanger 12.

Accordingly, it is possible to detect earlier and more certainly that water self-sustaining state is not established.

### <Third Control Example>

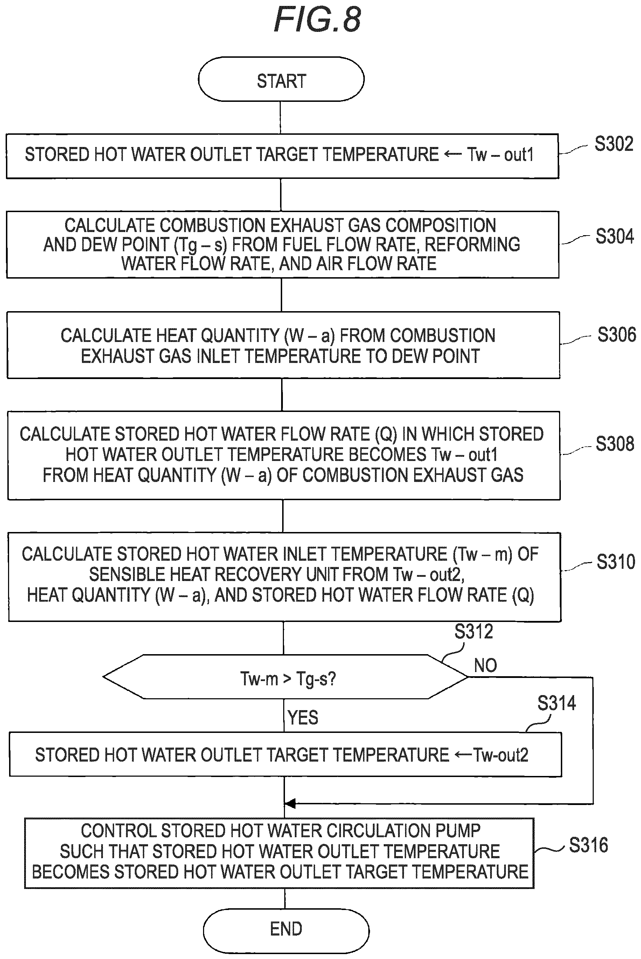

Next, operations of the fuel cell system 1 described above (third control example) will be described in line with a flowchart illustrated in Fig. 8. The third control example is different from the first control example in the following points. The water self-sustaining non-establishment determination unit (Step S102) of the first control example determines non-establishment of the water self-sustaining state from the water level of the water tank 14. However, in the third control example, non-establishment of the water self-sustaining state is determined from the dew point of the combustion exhaust gas in the heat exchanger 12.

Specifically, the control device 15, in Step S302, sets the target temperature TH3* of the stored hot water outlet temperature (heat exchanger stored hot water outlet temperature) of the heat exchanger 12 to the first set temperature Tw - out1.

The control device 15, in Step S304, calculates the dew point of the combustion exhaust gas Tg - s. The control device 15, as described above, calculates the composition of the combustion exhaust gas and the dew point Tg - s from the fuel flow rate, the reforming water flow rate, and cathode air flow rate.

The control device 15, in Step S306, as described above, calculates the heat quantity of the combustion exhaust gas W - a from the combustion exhaust gas inlet temperature to the dew point Tg - s.

The control device 15, in Step S308, calculates the stored hot water flow rate Q (stored hot water flow rate per unit time), in which the stored hot water outlet temperature (heat exchanger stored hot water outlet temperature) of the heat exchanger 12 becomes the first set temperature Tw - out1 which is the target temperature TH3*, from the heat quantity W - a of the combustion exhaust gas.

The control device 15, in Step S310, calculates the stored hot water inlet temperature Tw - m of the sensible heat recovery unit in a case where the target temperature TH3* of the heat exchanger stored hot water outlet temperature is set to the second set temperature Tw - out2. The control device 15, as described above, calculates the stored hot water inlet temperature Tw - m of the sensible heat recovery unit from the second set temperature Tw - out2, the heat quantity W - a of the combustion exhaust gas calculated before, and the stored hot water flow rate Q calculated before.

The control device 15, in Step S312, compares the stored hot water inlet temperature Tw - m of the sensible heat recovery unit and the dew point of the combustion exhaust gas Tg - s that are calculated before and determines that water self-sustaining state is not established. In a case where the stored hot water inlet temperature Tw - m of the sensible heat recovery unit is less than or equal to the dew point of the combustion exhaust gas Tg - s, the control device 15 determines that water self-sustaining state is established. On the other hand, in a case where the stored hot water inlet temperature Tw - m of the sensible heat recovery unit is greater than the dew point of the combustion exhaust gas Tg - s, the control device 15 determines that water self-sustaining state is not established. The control device 15 may compare the dew point of the combustion exhaust gas Tg - s with a sum of the stored hot water inlet temperature Tw - m of the sensible heat recovery unit and a predetermined value.

In a case where water self-sustaining state is non-establishment (determination result in Step S312 is "YES"), the control device 15 (target temperature decrease setting unit), in Step S314, sets the target temperature TH3* of the heat exchanger stored hot water outlet temperature to the second set temperature Tw - out2 to be reduced. The control device 15 (delivery quantity control unit), in Step S316, controls the delivery quantity of the stored hot water circulating pump 22b such that the target temperature becomes the target temperature TH3* (second set temperature Tw- out2) which is set in Step S314 (target temperature decrease setting unit).

On the other hand, in a case where water self-sustaining state is establishment (determination result in Step S312 is "NO"), the control device 15 causes a program to proceed to Step S316 and controls the delivery quantity of the stored hot water circulating pump 22b such that the target temperature becomes the target temperature TH3* (first set temperature Tw - out1) which is set in Step S302 (delivery quantity control unit).

According to the third control example, the control device 15 (water self-sustaining non-establishment determination unit) determines that water self-sustaining state is not established from the dew point of the combustion exhaust gas in the heat exchanger 12 (Step S312).

Accordingly, it is possible to detect more certainly that water self-sustaining state is not established.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. A fuel cell system (1) includes: a fuel cell (34) generating power by fuel and oxidizer gas; a reforming unit (33) generating the fuel from a reforming raw material and reforming water and supplying the fuel to the fuel cell; a combustion unit (36) introducing combustible gas containing unused fuel from the fuel cell thereinto, burning the combustible gas, and leading out the combustion exhaust gas; a hot water storage tank (21); a heat exchanger (12) exchanging heat between the combustion exhaust gas and stored hot water, condensing water vapor in the combustion exhaust gas, and producing condensed water; a stored hot water circulation line (22) circulating the stored hot water; a delivery device (22b) provided in the stored hot water circulation line and delivering the stored hot water; a heat exchanger stored hot water outlet temperature sensor (22d) detecting the temperature of the stored hot water; and a control device (15) controlling the delivery quantity of the delivery device.

## Claims

1. A fuel cell system (1) comprising:
a fuel cell (34) that generates power by fuel and oxidizer gas;
a reforming unit (33) that generates the fuel from a reforming raw material and reforming water and supplies the fuel to the fuel cell;
a combustion unit (36) that introduces combustible gas containing unused fuel from the fuel cell thereinto, burns the combustible gas using oxidizer gas, and leads out the combustion exhaust gas;
a hot water storage tank (21) that stores stored hot water;
a heat exchanger (12) that performs heat exchange between the combustion exhaust gas and the stored hot water, condenses water vapor contained in the combustion exhaust gas, and produces condensed water;
a stored hot water circulation line (22) formed to circulate the stored hot water between the hot water storage tank and the heat exchanger;
a delivery device (22b) that is provided in the stored hot water circulation line and delivers the stored hot water to be circulated;
a heat exchanger stored hot water outlet temperature sensor (22d) that is provided between a stored hot water lead-out port (12f) of the heat exchanger and a stored hot water introduction port (21 c) of the hot water storage tank in the stored hot water circulation line and detects the temperature of the stored hot water led out from the heat exchanger; and
a control device (15) that controls the delivery quantity of the delivery device,
wherein the control device includes:
a water self-sustaining non-establishment determination unit configured to determine whether a water self-sustaining state where a reforming water quantity required for the power generation in the fuel cell is covered by only the condensed water produced by the heat exchanger is established or not,
a target temperature decrease setting unit configured to decrease a target temperature of a stored hot water outlet temperature of the heat exchanger in a case where it is determined, by the water self-sustaining non-establishment determination unit, that the water self-sustaining state is not established, and
a delivery quantity control unit configured to control the delivery quantity of the delivery device such that the temperature of the stored hot water led out from the heat exchanger becomes the target temperature which is set by the target temperature decrease setting unit.

2. The fuel cell system according to claim 1, further comprising:
a water tank (14) that stores the condensed water supplied from the heat exchanger and supplies the condensed water to the reforming unit as the reforming water,
wherein the water self-sustaining non-establishment determination unit determines that the water self-sustaining state is not established, in a case where a water level in the water tank is lower than a determination water level.

3. The fuel cell system according to claim 1,
wherein the water self-sustaining non-establishment determination unit determines that the water self-sustaining state is not established from a sensible heat/latent heat ratio calculated from sensible heat and latent heat capable of being recovered from the combustion exhaust gas in the heat exchanger.

4. The fuel cell system according to claim 1,
wherein the water self-sustaining non-establishment determination unit determines that the water self-sustaining state is not established from a dew point of the combustion exhaust gas in the heat exchanger.

5. The fuel cell system according to any one of claims 1 to 4,
wherein the target temperature decrease setting unit sets the target temperature such that the sensible heat/latent heat ratio calculated from the sensible heat and the latent heat capable of being recovered from the combustion exhaust gas in the heat exchanger becomes a value with which the water self-sustaining state is established.

6. The fuel cell system according to any one of claims 1 to 4,
wherein the target temperature decrease setting unit sets the target temperature such that an exhaust heat recovery water inlet temperature serves as a rate limiting factor for the heat exchange capability of the heat exchanger.

## Patentansprüche

1. Brennstoffzellensystem (1) mit:
einer Brennstoffzelle (34) zur Erzeugung von Energie aus einem Brennstoff und einem Oxidationsgas;
einer Reformierungseinheit (33) zur Erzeugung des Brennstoffs aus einem Reformierungsrohstoff und Reformierungswasser und zur Versorgung der Brennstoffzelle mit Brennstoff;
einer Verbrennungseinheit (36) zur dortigen Einleitung von unverbrauchtem Brennstoff enthaltendem brennbaren Gas aus der Brennstoffzel-le, zur Verbrennung des brennbaren Gases unter Verwendung von Oxidationsgas und zur Ausleitung des Verbrennungsabgases;
einem Heißwasserspeichertank (21) zur Speicherung von gespeichertem heißem Wasser;
einem Wärmetauscher (12) zur Durchführung eines Wärmetausches zwischen dem Verbrennungsabgas und dem gespeicherten heißen Wasser, zur Kondensierung von in dem Verbrennungsabgas enthaltenem Wasserdampf, und zur Gewinnung von kondensiertem Wasser;
einer Speicherheißwasserumwälzleitung (22) zur Umwälzung des gespeicherten heißen Wassers zwischen dem Heißwasserspeichertank und dem Wärmetauscher;
eine Zuführungsvorrichtung (22b), die zur Zuführung des gespeicherten heißen Wassers zur Umwälzung in der Speicherheißwasserumwälzleitung bereitgestellt ist;
ein Wärmetauscherspeicherheißwasserauslasstemperatursensor (22d), der zwischen einem Speicherheißwasserausleitungsanschluss (12f) des Wärmetauschers und einem Speicherheißwassereinleitungsanschluss (21c) des Heißwasserspeichertanks in der Speicherheißwasserumwälzleitung bereitgestellt ist, zur Erfassung der Temperatur des aus dem Wärmetauscher ausgeleiteten gespeicherten heißen Wassers; und
einer Steuervorrichtung (15) zur Steuerung der Zuführungsmenge der Zuführungsvorrichtung,
wobei die Steuervorrichtung beinhaltet:
eine Wasserselbstversorgungsnichtzustandekommensbestimmungseinheit, die zur Bestimmung eingerichtet ist, ob ein Zustand der Wasserselbstversorgung, bei dem eine zur Energieerzeugung in der Brennstoffzelle benötigte Reformierungswassermenge lediglich durch das durch den Wärmetauscher gewonnene Kondenswasser gesichert ist, zustande kommt oder nicht,
eine Zieltemperaturverringerungseinstellungseinheit, die zur Verringerung einer Zieltemperatur einer Speicherheißwasserauslasstemperatur des Wärmetauschers bei einem Fall, bei dem durch die Wasserselbstversorgungsnichtzustandekommensbestimmungseinheit bestimmt wird, dass der Zustand der Wasserselbstversorgung nicht zustande kommt, eingerichtet ist, und
eine Zuführungsmengensteuereinheit, die zur Steuerung der Zuführungsmenge der Zuführungsvorrichtung derart eingerichtet ist, dass die Temperatur des von dem Wärmetauscher ausgelassenen gespeicherten heißen Wassers die durch die Zieltemperaturverringerungseinstellungseinheit eingestellte Zieltemperatur wird.

2. Brennstoffzellensystem nach Anspruch 1, ferner mit:
einem Wassertank (14) zur Speicherung des kondensierten Wassers aus der Versorgung durch den Wärmetauscher und zur Versorgung der Reformierungseinheit mit dem kondensierten Wasser als das Reformierungswasser,
wobei bei einem Fall, bei dem ein Wasserniveau in dem Wassertank niedriger als ein Wasserbestimmungsniveau ist, durch die Wasserselbstversorgungsnichtzustandekommensbestimmungseinheit bestimmt wird, dass der Zustand der Wasserselbstversorgung nicht zustande kommt.

3. Brennstoffzellensystem nach Anspruch 1,
wobei über die Wasserselbstversorgungsnichtzustandekommensbestimmungseinheit durch ein aus einer aus dem Verbrennungsabgas in dem Wärmetauscher rückgewinnbaren sensiblen Wärme und latenten Wärme berechnetes Verhältnis von sensibler Wärme zu latenter Wärme bestimmt wird, dass der Zustand der Wasserselbstversorgung nicht zustande kommt.

4. Brennstoffzellensystem nach Anspruch 1,
wobei über einen Taupunkt des Verbrennungsabgases in dem Wärmetauscher durch die Wasserselbstversorgungsnichtzustandekommensbestimmungseinheit bestimmt wird, dass der Zustand der Wasserselbstversorgung nicht zustande kommt.

5. Brennstoffzellensystem nach einem der Ansprüche 1 bis 4,
wobei durch die Zieltemperaturverringerungseinstellungseinheit die Zieltemperatur derart eingestellt wird, dass das aus der aus dem Verbrennungsabgas in dem Wärmetauscher rückgewinnbaren sensiblen Wärme und latenten Wärme berechnete Verhältnis von sensibler Wärme zu latenter Wärme solch einen Wert annimmt, mit dem der Zustand der Wasserselbstversorgung zustande kommt.

6. Brennstoffzellensystem nach einem der Ansprüche 1 bis 4,
wobei durch die Zieltemperaturverringerungseinstellungseinheit die Zieltemperatur derart eingestellt wird, dass eine Abwärmerückgewinnungswassereinlasstemperatur als ein Ratenbegrenzungsfaktor für das Wärmeaustauschvermögen des Wärmetauschers dient.

## Revendications

1. Système de pile à combustible (1) comprenant :
une pile à combustible (34) qui produit de l'énergie par un combustible et un gaz oxydant ;
une unité de réformage (33) qui produit le combustible à partir d'une matière brute de réformage et de l'eau de réformage et introduit le combustible dans la pile à combustible ;
une unité de combustion (36) qui introduit du gaz combustible contenant du combustible non utilisé de la pile à combustible dans celle-ci, brûle le gaz combustible en utilisant un gaz oxydant, et évacue les gaz d'échappement de combustion ;
un récipient de stockage d'eau chaude (21) qui stocke de l'eau chaude stockée ;
un échangeur de chaleur (12) qui réalise un échange de chaleur entre les gaz d'échappement de combustion et l'eau chaude stockée, condense la vapeur d'eau contenue dans les gaz d'échappement de combustion, et produit de l'eau condensée ;
une ligne de circulation d'eau chaude stockée (22) formée pour faire circuler l'eau chaude stockée entre le récipient de stockage d'eau chaude et l'échangeur de chaleur ;
un dispositif de distribution (22b) qui est fourni dans la ligne de circulation d'eau chaude stockée et qui distribue l'eau chaude stockée à faire circuler ;
un détecteur de température de sortie d'eau chaude stockée de l'échangeur de chaleur (22d) qui est fourni entre un orifice de sortie d'eau chaude stockée (12f) de l'échangeur de chaleur et un orifice d'introduction d'eau chaude stockée (21c) du récipient de stockage d'eau chaude dans la ligne de circulation d'eau chaude stockée et détecte la température de l'eau chaude stockée évacuée par l'échangeur de chaleur ; et
un dispositif de contrôle (15) qui contrôle la quantité de distribution du dispositif de distribution,
dans lequel le dispositif de contrôle comprend :
une unité de détermination de non-création autonome d'eau configurée pour déterminer si un état autonome d'eau ou une quantité d'eau de réformage exigée pour la production d'énergie dans la pile à combustible est couvert uniquement par l'eau condensée produite par l'échangeur de chaleur est créé ou non,
une unité d'ajustement de diminution de température cible configurée pour diminuer une température cible d'une température de sortie d'eau chaude stockée de l'échangeur de chaleur dans un cas où il est déterminé, par l'unité de détermination de non-création autonome d'eau, que l'état autonome d'eau n'est pas créé, et
une unité de contrôle de quantité de distribution configurée pour contrôler la quantité de distribution du dispositif de distribution de sorte que la température de l'eau chaude stockée évacuée de l'échangeur de chaleur devienne la température cible qui est fixée par l'unité d'ajustement de diminution de température cible.

2. Système de pile à combustible selon la revendication 1, comprenant de plus :
un récipient d'eau (14) qui stocke l'eau condensée introduite à partir de l'échangeur de chaleur et introduit l'eau condensée dans l'unité de réformage comme l'eau de réformage,
dans lequel l'unité de détermination de non-création autonome d'eau détermine que l'état autonome d'eau n'est pas créé, dans un cas où un niveau d'eau dans le récipient d'eau est inférieur à un niveau d'eau de détermination.

3. Système de pile à combustible selon la revendication 1, dans lequel l'unité de détermination de non-création autonome d'eau détermine que l'état autonome d'eau n'est pas créé à partir d'un rapport chaleur sensible/chaleur latente calculé à partir de chaleur sensible et de chaleur latente capables d'être récupérées à partir des gaz d'échappement de combustion dans l'échangeur de chaleur.

4. Système de pile à combustible selon la revendication 1, dans lequel l'unité de détermination de non-création autonome d'eau détermine que l'état autonome d'eau n'est pas créé à partir d'un point de rosée des gaz d'échappement de combustion dans l'échangeur de chaleur.

5. Système de pile à combustible selon l'une quelconque des revendications 1 à 4,
dans lequel l'unité d'ajustement de diminution de température cible ajuste la température cible de sorte que le rapport de chaleur sensible/chaleur latente calculé à partir de la chaleur sensible et de la chaleur latente capables d'être récupérées à partir des gaz d'échappement de combustion dans l'échangeur de chaleur devienne une valeur avec laquelle l'état autonome d'eau est créé.

6. Système de pile à combustible selon l'une quelconque des revendications 1 à 4,
dans lequel l'unité d'ajustement de diminution de température cible ajuste la température cible de sorte qu'une température d'entrée d'eau de récupération de chaleur d'échappement serve comme un facteur limitant pour la capacité d'échange de chaleur de l'échangeur de chaleur.
